(19) Europäisches Patentamt
European Patent Office
Office européen des brevets

(11) **EP 3 293 535 A1**

(12) **EUROPEAN PATENT APPLICATION**

(43) Date of publication:
**14.03.2018 Bulletin 2018/11**

(51) Int Cl.:
***G01S 5/02*** *(2010.01)* ***H04W 64/00*** *(2009.01)*

(21) Application number: **16187540.6**

(22) Date of filing: **07.09.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Danmarks Tekniske Universitet 2800 Lyngby (DK)**

(72) Inventors:
• **Stenseng, Lars**
  **3400 Hillerød (DK)**
• **Høeg, Per**
  **2300 Copenhagen S (DK)**
• **David Overton Chabre, Holm**
  **2765 Smørum (DK)**

(74) Representative: **Inspicos P/S Kogle Allé 2 2970 Hørsholm (DK)**

(54) **METHOD FOR DETERMINING LOCALISATION AND/OR VELOCITY INFORMATION OF ONE OR MORE PORTABLE DEVICES**

(57)    The invention relates to a method of determining localisation and/or velocity information of one or more portable devices, such as cell phones, tablets, laptops, etc. Each of one or more portable devices is intermittently emitting service/acquisition request signals. These signals are simultaneously received by one or more sensors, which observe at least two types of observations relating to the received service/acquisition request signals at each sensor. The method further determines the localisation and/or velocity information by using the at least two types of observations in the same algorithm.

## Description

FIELD OF THE INVENTION

The present invention relates to a method of determining localisation and/or velocity information of one or more portable devices, e.g. electronic portable devices, such as cell phones, tablets, laptops, cars (with mobile network connection), RF/RFID tags etc.

BACKGROUND OF THE INVENTION

Location determination of portable devices, such as cell phone or other kinds of communication devices, became extremely important in the era of internet communication. The portable devices are typically using Wi-Fi and/or Bluetooth technologies to connect to different communication networks installed all over the world. For instance, by detecting presence and location of portable devices, the number of pedestrians, cycles, cars, busses, lorries or other vehicles within a specific area may be determined, and therefore city traffic may be monitored and utilised for traffic optimisation. Further, by knowing a location of cell phones of users different monitoring can be performed at big events or different venues, such as crowd management during evacuation of stadiums, stations, large public events and other crowded places. Cell phones and other portable devices typically use radio-frequency (RF) to exchange data with other devices, e.g. other smart phones or access points to the Internet. To conserve power, the RF operations are minimized to as few and short bursts as possible without harming the connectivity. However, these brief signals can experience significant losses due to environmental conditions what makes it difficult to determine e.g. exact location of an idle portable device. Standard methods for location determination are typically using one parameter to determine the location of the portable device. This determination may be performed by a plurality of sensor units. The final solution for location is then calculated by averaging a plurality of locations determined by the plurality of sensor units. This may introduce large uncertainties of the determined location.

DESCRIPTION OF THE INVENTION

It is an object of embodiments of the invention to provide a method for determining location and/or velocity information of one or more portable devices, the method providing a significant improvement in accuracy compared to existing technologies for the location and/or velocity determination.
The invention provides a method for determining localisation and/or velocity information of one or more portable devices, the method comprising following steps:

- each of one or more portable devices emitting, intermittently, service/acquisition request signals;

- one or more sensors simultaneously receiving the service/acquisition request signals, observing from the received service/acquisition request signals, at least two types of observations; and

- determining the localisation and/or velocity information by using the at least two types of observations in the same algorithm.

The present invention relates to a method for determining localisation and/or velocity information of one or more portable devices. In the present context the term "determining" should be interpreted as ascertaining information related to a portable device. The localisation and/or velocity information may relate to the position or location of the portable device, it may relate to whether the portable device is stationary or moving, or it may relate to both location and velocity of the portable device. This will be described in further detail below. The portable device may, e.g., be a cell phone, a laptop, a tablet, cars (with mobile network connection), RF/RFID tags, a smart watch, or any other suitable kind of portable device being capable of emitting service/acquisition request signals. In the present context, the term "portable" is to be interpreted as e.g. a wireless device such as a laptop, or battery powered such as a cell phone, or a device, which is not fixed to one place such as a car.
According to the method of the invention, each of one or more portable devices is emitting, service/acquisition request signals. The service/acquisition request signals may relate to e.g. probe requests sent from a portable device to identify networks or network elements to connect to. Further, the service/acquisition request signals may be sent from a portable device to check whether calls and texts are incoming. These signals may be output automatically and thus may not depend on the portable device being in active use. Furthermore, the service/acquisition request signals are emitted intermittently, i.e. they may be output periodically having periods being "on" and being "off". Each service/acquisition request signal may be of a certain frequency or frequency band, may have a certain strength and direction.

Next, the service/acquisition request signals are simultaneously received by one or more sensors. The sensors may be a part of global communication networks or may be installed separately in buildings, at streets, or any other relevant convenient location. The sensors may be capable of simultaneously sensing, e.g., strength, latitude, speed, frequency, identity, and the transmitted information layer in the request/acquisition data format of a plurality of the incoming service/acquisition request signals. Each sensor, based on the received service/acquisition request signals, is further observing at least two types of observations. The observations may be parameters which will be used for determining the localisation and/or velocity information of a portable device. The sensors may be installed at a predetermined distance with respect to each other. The predetermined distance may vary depending on where they are installed (indoor, outdoor) and what is a required precision for the localisation and/or velocity information determination. Furthermore, at least three sensors may be distributed such that they for a triangle surrounding the portable device.

According to the method of the invention, determining the localisation and/or velocity information is performed by using the at least two types of observations in the same algorithm. The used algorithm is capable of processing at least two observations at the same time and calculating required information. The used algorithm will be described in further detail below.

Since two different types of observations provide complimentary information regarding the location and/or velocity of the portable device emitting the service/acquisition request signals, the described method enables determination of the localisation and/or velocity information which is more stable and precise and with reduced noise and uncertainty compared to a case when only one observation is used in an algorithm or when the solution is averaged over a plurality of solutions obtained by using one observation per algorithm.

The observations used for determining the localisation and/or velocity information of a portable device may include a received signal strength of the service/acquisition request signal, a frequency Doppler shift of the service/acquisition request signals, a direction of the service/acquisition request signals, a time of arrival signal of the service/acquisition request signals between the portable device and the pertaining sensor, or the like. The received signal strength of the service/acquisition request signal may be used for determination of location of a portable device. The strength may vary depending on a distance between a portable device emitting the service/acquisition request signal and a sensor receiving it. Furthermore, the strength may depend on environmental conditions such as weather, conditions, reflective surfaces or possible barriers. The frequency Doppler shift of the service/acquisition request signals may be used for determining a direction and speed of a portable device when it is moving. The direction of the service/acquisition request signals may be used for determining a change in position of a portable device from a previous position to the current one. The time of arrival signal of the service/acquisition request signals between the portable device and the pertaining sensor may be used for location determination of a portable device. This time may be influenced by e.g. multipath effect.

According to one embodiment of the invention, at least one of the at least two types of observations may be a received signal strength of the service/acquisition request signals. The received signal strength may be combined with at least one other type of observations, such as a frequency Doppler shift of the service/acquisition request signals, a direction of the service/acquisition request signals, a time of arrival signal of the service/acquisition request signals between the portable device and the pertaining sensor, or the like.

Alternatively or additionally, at least one of the at least two types of observations may be a frequency Doppler shift of the service/acquisition request signals. The frequency Doppler shift of the service/acquisition request signals may be combined with at least one other type of observations, such as one or more of the types of observations mentioned above.

Alternatively or additionally, at least one of the at least two types of observations may be a direction of the service/acquisition request signals. Similarly, to what is described above, the direction of the service/acquisition request signal may be combined with at least one of the other types of observations described above.

Alternatively or additionally, at least one of the at least two types of observations may be a time of arrival signal of the service/acquisition request signals between the portable device and the pertaining sensor. Once again, similarly to what is described above, the direction of the service/acquisition request signal may be combined with at least one of the other types of observations described above.

Three or more types of observations may be used for determining the localisation and/or velocity information. For instance, the received signal strength may be combined with two other types of observations, such as with the frequency Doppler shift of the service/acquisition request signals and the direction of the service/acquisition request signals. In another embodiment, the received signal strength may be combined with the time of arrival signal of the service/acquisition request signals between the portable device and the pertaining sensor and Doppler shift of the service/acquisition request signals. In yet another embodiment, the received signal strength may be combined with the time of arrival signal of the service/acquisition request signals between the portable device and the direction of the service/acquisition request signals. Furthermore, the direction of the service/acquisition request signals may be combined with the frequency Doppler shift of the service/acquisition request signals and the time of arrival signal of the service/acquisition request signals between the portable device and the direction of the service/acquisition request signals. In yet another embodiment the received signal strength of the service/acquisition request signal may be combined with the frequency Doppler shift of the service/acquisition request signals, the direction of the service/acquisition request signals, and the time of arrival signal of the service/acquisition request signals between the portable device and the pertaining sensor.

Each of the observations described above is associated with an error magnitude, describing the uncertainty on a single observation. By combining at least two different types of observations it is possible to reduce uncertainties and faults of the determined localisation and/or velocity information of one or more portable devices as each of the observations provides a complementary information about a portable device.

According to one embodiment of the invention, the service/acquisition request signals may be radio frequency (RF) signals. The RF signals are to be interpreted as signals having a frequency or a frequency band that lie in the range from approximately 3 kHz to approximately 300 GHz, and include frequencies used for radio communications or radar signals. To conserve power, operations of the RF signals may be minimized to as few short signals per period of time without harming the connectivity between a portable device generating the RF signal and a network access point.

By having the service/acquisition request signals being RF signals, the method can be easily implemented on an already existing infrastructure of networks which typically use RF signals to exchange data between different portable devices and network access points.

According to one embodiment of the invention, the service/acquisition request signals may be emitted in the form of bursts. In the present context the term "burst" should be interpreted as a signal periodically generated over a short period of time, i.e. over a period of time, which is significantly shorter than the time period between two bursts. A burst may have a duration, which is a fraction of a second to several milliseconds. The burst duration may be within the interval such as 0.1 ms-5.0 ms, such as 0.1 ms - 1 ms, such as 0.1 ms - 0.6 ms, such as 0.15 ms - 0.5 ms, such as 0.15 ms - 0.3 ms, preferably 0.2 ms. Each burst may be followed by a waiting period with duration ranging from 20 ms to several minutes. Namely, a portable device may output bursts, e.g., 10 to 100 times per minute, such as 20-90, such as 30-80, such as 40-70, such as 50-60, and preferably 55 bursts per minute. A burst cycle for e.g. a Wi-Fi probe request may be as follows: the portable device may transmit one or several service/acquisition request signals, each with a duration of 0.1 ms - 2 ms, followed by a 20 ms - 40 ms of receiving period. The portable device may then switch to another channel and may repeat the transmit/receive sequence. When all or a selected subset of channels have been probed, the portable device may be in standby for a longer period, such as between 10 s and 5 minutes, typically 1 minute - 2 minutes.

By having the service/acquisition request signals in the form of bursts which the portable device may output automatically, the determination of the localisation and/or velocity information of a portable device will not depend on the device being in active use. Additionally, by having brief signals emitted power consumption of the device may be reduced.

According to one embodiment of the invention, one or more sensors may be broadband sensors covering one or more communication channels, the communication channel(s) being used for communicating the service/acquisition request signals. In this context the term "broadband" may be interpreted as a frequency band which spans at least two of the communication channels which are used by the portable devices for communicating the service/acquisition request signals. The frequency band may, e.g., span over a standard frequency range of Wi-Fi systems (2-6 GHz, according to the Institute of Electrical and Electronics Engineers (IEEE) standards 802.11), cellular technologies (3G/4G/5G/WIMAX/LTE ranging from 5-20 MHz, optionally up to 40 MHz, according to International Telecommunications Union - Radio Communications Sector (ITU-R) specifications), Bluetooth systems (v. 1.0-4.2 at the frequency range 2.4-2.485 GHz), and RFID technologies (120-150 kHz, 13.56 MHz, 433 MHz, 865-868 MHz, 2.45-2.8 GHz, and 3.1-10 GHz).

To allow several portable devices to communicate with RF signals simultaneously without interfering with other portable devices, one portable device may use one or few RF signals. A frequency, or a set of frequencies, used by a network or a network access point may be unknown to the portable device and the portable device may therefore need to scan all available frequencies to find the service in question. By using a broadband sensor covering a relatively wide RF band, a number of possible observations may increase with a factor equal to the number of frequency bands covered by the broadband sensor. The larger the number of observations the more precise the information about the portable device will be. The scaling covers all the different types of observations. This increase in the amount of observations can be used to decrease the error and provide a mean for outlier detection and removal. Namely, if a portable device is simultaneously monitored on multiple channels the device may be identified multiple times (at least once on each channel). Since the error decreases when the number of observations increases, the result may be improved by tracking the device on multiple channels instead of only one.

The localisation and/or velocity information may contain one or more of the group consisting of: presence of the portable device, position of the portable device, change in the position of the portable device, velocity of the portable device, and change in velocity of the portable device as a function of time. Namely, the information may be identified at six different complexity levels. The simplest information about a portable device may relate to a presence of a portable device as a function of time. This information may be widely used in e.g. airports for crowd monitoring and providing different data to travellers on e.g. required time to move from one zone before security to another zone after security. The information in this case may be determined with one or more sensors. The next level of complexity may be the information containing a presence and distance from a pertaining sensor as a function of time and for this determination at least two sensors may be required. The third level of complexity may be the information containing a presence and location determined with two coordinates (X, Y) of standard Cartesian coordinate system as a function of time. Further, the information may contain a presence and location determined with three coordinates (X, Y, Z) as a function of time. Yet more complex information of a portable device may contain a presence, location (X, Y, Z) and a velocity vector determined by two coordinates ($V_x$, $V_y$) as a function of time. The sixth level of complexity may relate to the information containing a presence of portable device, location (X, Y, Z), and a velocity vector ($V_x$, $V_y$, $V_z$). In order to determine the information of a portable device which has a complexity higher than 3, three or more sensors may be used. By having more sensors than the minimum required the error in determining the localisation and/or velocity information of one or more portable devices may be minimized.

In one embodiment of the invention, the velocity vector may be determined directly from a frequency Doppler shift of the service request/acquisition signal. Namely, the velocity information may be estimated by observing an intersection of the Doppler shift in frequency observed by at least three stationary sensors. The at least three stationary sensors can observe the Doppler shift from the movement (velocity). One sensor can observe only a part of the velocity vector that is projected onto the line of sight between the portable device and the sensor. If the portable device is observed with two sensors where the angle between the two lines of sight is larger than 0°, the most probable 2D velocity vector of the portable device may be determined. Adding a third sensor with a line of sight lager than 0° to the plane spanned by the two first lines of sight the full 3D velocity vector can be determined. The position of the portable device may also be derived as an intersection between hyperbolic surfaces of constant (observed) Doppler surrounding each sensor.

In another embodiment, the velocity vector may be determined by determining a location of the portable device at two different points in time. As in the above described embodiment, at least three sensors may be used to determine the velocity vector. Namely, three estimates of directional velocities may be combined to a full 3D velocity vector.

In one embodiment of the invention, the algorithms used for determining the localisation and/or velocity information of one or more portable devices may contain statistical dilution of precision (DOP) for the position information (PDOP) and time information (TDOP). The algorithm is correlating at least two observations in one equation, setting different weights on different observations.

The algorithms giving the solutions matrix S consist of three matrix operators,

$$S = R * P * M$$

where M represents the measurements operator based on the actual observables, P is the parameter operator based on the measurements of the system of sensors, and R the retrieved data from the whole system.

| OPERATORS/ MATRICES | OBSERVABLES/PARAMETERS/SYSTEM |
|---|---|
| Measurements M = F(obs) | Time, Sensor id, Frequency channel, Channel width, Signal type, Signal strength, Access point antenna number, Azimuth angle, Zenith angle, unit id, Tx/Rx information and housekeeping data of the sensors and each communicating RF-unit. |
| Parameters P = F(M) | Parameters (as position, time, and time window) for each unit ID, derived from all the sensors that have been monitoring the unit ID in question. This is done for all unit IDs that have been observed by two sensors or more in the observational volume, defined by the total coverage of all sensors. |
| Retrieval R = F(P) | Linear regression applying least-squares solutions on the calculated P matrix for each unit ID in the observational zone. |
| Solutions S = R * P * M | Solution matrix giving for each mac ID the information: time, unit ID, position, velocity, direction, dwell time since the last estimate of that unit ID, and dilution of precision (DOP) for the position information (PDOP) and time information (TDOP). |

BRIEF DESCRIPTION OF THE DRAWINGS

The invention will now be described in further detail with reference to the accompanying drawings in which:

Fig. 1 illustrates determining a localisation information of a portable device using a received signal strength of a service/acquisition request signal;

Fig. 2 illustrates determining a localisation information of a portable device using a direction of the service/acquisition request signals;

Fig. 3 illustrates determining a velocity information of a portable device using a frequency Doppler shift of the service/acquisition request signals; and

Fig. 4 illustrates determining a localisation and/or velocity information of a portable device simultaneously using a received signal strength of a service/acquisition request signal and a direction of the service/acquisition request signals.

DETAILED DESCRIPTION OF THE DRAWINGS

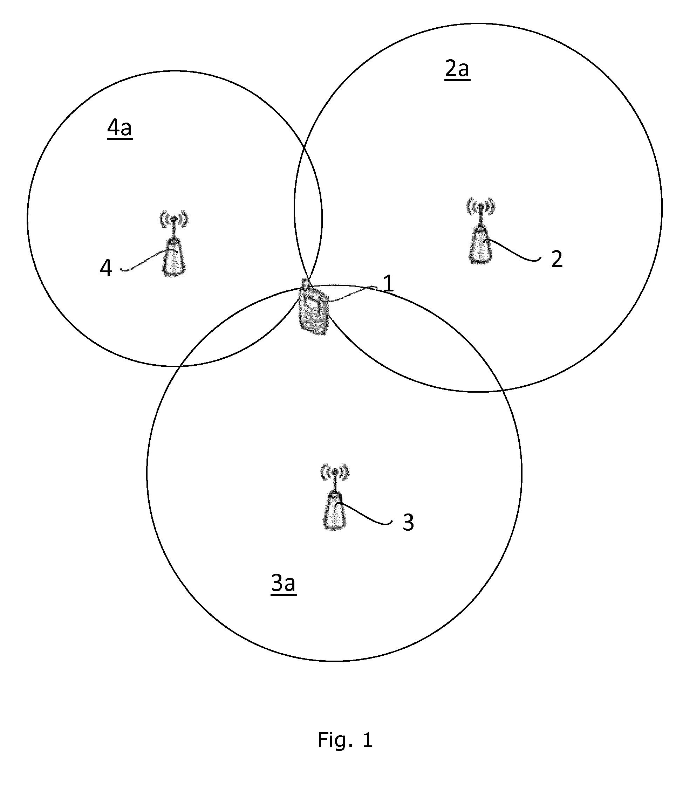

Fig. 1 illustrates a well-known method for determining localisation information of a portable device 1, in the form of a cell phone, by using a trilateration of received signal strength of a service/acquisition request signal by multiple sensors 2, 3, and 4. In the situation illustrated in Fig. 1, three different sensors 2, 3, and 4 will receive a service/acquisition request signals from the portable device 1. Based on strength of the received service/acquisition request signal, each sensor will create a circle 2a, 3a, and 4a with a centre at the sensor and a radius based on strength of the received service/acquisition request signal. By determining an intersection area of the three circles, the localisation information of the portable device 1 will be determined. A radius of circles can also be estimated based on a time of arrival signal of the service/acquisition request signals between the portable device 1 and the pertaining sensor. Typically, in such a configuration one sensor is capable of observing only one observation at the time.

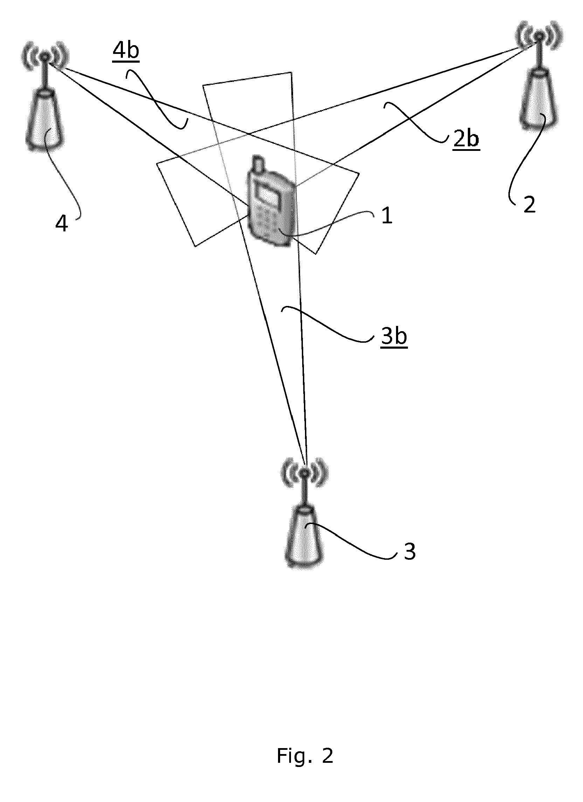

Fig. 2 illustrates determining localisation information of a portable device 1, in the form of a cell phone, using a direction of received service/acquisition request signals. As in the previously described example, the localisation information about the portable device 1 will be determined by using a cross-point between the directions 2b, 3b, and 4b determined by the sensors 2, 3, and 4 respectively.

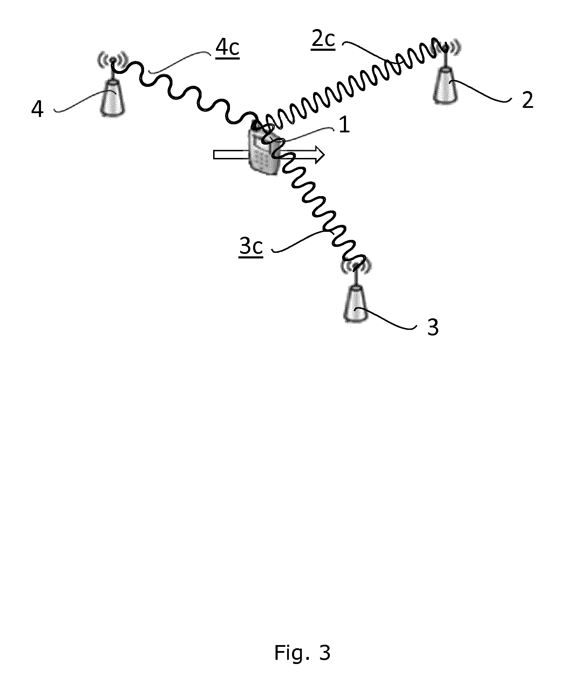

Fig. 3 illustrates determining velocity information of a portable device 1, in the form of a cell phone, using a frequency Doppler shift of received service/acquisition request signals. The velocity information of the portable device 1 is estimated by an intersection of the lines 2c, 3c, and 4c which are the lines of carrier frequency Doppler shift observed by the sensors 2, 3, and 4. The sensors 2, 3 and 4 observe the Doppler shift from the movement of the portable device 1. One sensor observes only a part of the velocity vector that is projected onto the line of sight between the portable device and the sensor. This line of sight has a direction along 2c, 3c or 4c. If the portable device is observed with two sensors where the angle between the two lines of sight is larger than 0°, the most probable 2D velocity vector of the portable device may be determined. Adding a third sensor with a line of sight lager than 0° to the plane spanned by the two first lines of sight the full 3D velocity vector can be determined.

The situations illustrated in Figs. 1-3 are well known per se and when used alone in different algorithms. Estimation of the information about the portable device 1 may have a considerable error, when using only one type of observations, particularly because of shortness of the service/acquisition request signals. According to the invention, at least two different types of observations, e.g. two or more of the types of observations illustrated in Figs. 1-3 and described above, are combined in the same algorithm, and the localisation and/or velocity information of a portable device can thereby be determined with high accuracy.

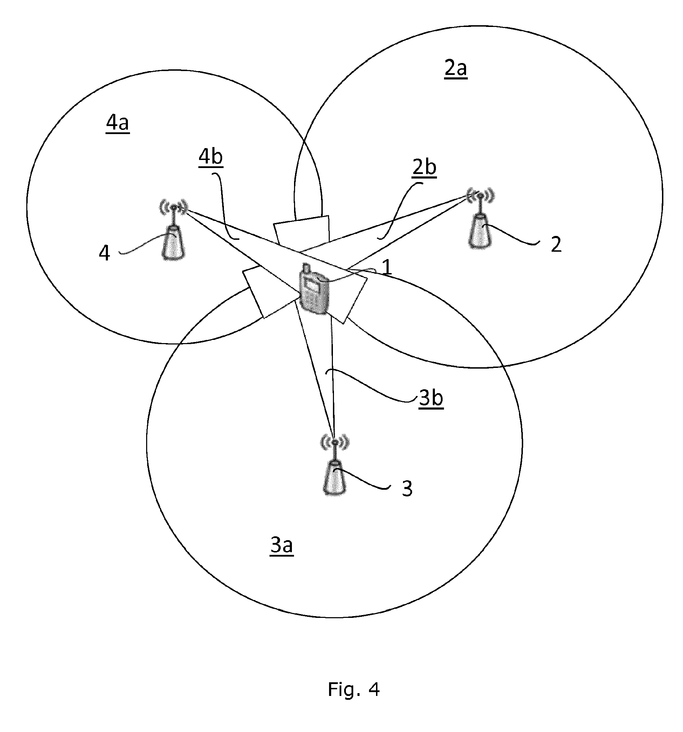

Fig. 4 illustrates how a localisation and/or velocity information of a portable device 1, in the form of a cell phone, can be determined by simultaneously using a received signal strength of a service/acquisition request signal and a direction of the service/acquisition request signals. Each of sensors 2, 3 and 4 simultaneously observe direction 2b, 3b, 4b and signal strength 2a, 3b, 4b of a service/acquisition signal. All these observations from the sensors 2, 3, 4 are then combined in one algorithm. By combining a number of simultaneous observations in one algorithm the obtained localisation and/or velocity information is more precise than the information obtained in the methods described above with reference to Figs. 1-3, and using only one type of observation. Adding further types of observations will further increase the stability and accuracy in the obtained localisation and/or velocity information of the portable device 1.

**Claims**

1. A method of determining localisation and/or velocity information of one or more portable devices, the method comprising following steps:

   - each of one or more portable devices emitting, intermittently, service/acquisition request signals;

- one or more sensors simultaneously receiving the service/acquisition request signals, observing from the received service/acquisition request signals, at least two types of observations; and
- determining the localisation and/or velocity information by using the at least two types of observations in the same algorithm.

2. A method according to claim 1, wherein at least one of the at least two types of observations is a received signal strength of the service/acquisition request signals.

3. A method according to claim 1 or 2, wherein at least one of the at least two types of observations is a frequency Doppler shift of the service/acquisition request signals.

4. A method according to any of the preceding claims, wherein at least one of the at least two types of observations is a direction of the service/acquisition request signals.

5. A method according to any of the preceding claims, wherein at least one of the at least two types of observations is a time of arrival signal of the service/acquisition request signals between the portable device and the pertaining sensor.

6. A method according to any of the preceding claims, wherein the service/acquisition request signals are radio frequency (RF) signals.

7. A method according to any of the preceding claims, wherein the service/acquisition request signals are emitted in the form of bursts.

8. A method according to any of the preceding claims, wherein one or more sensors is/are broadband sensors covering one or more communication channels, the communication channel(s) being used for communicating the service/acquisition request signals.

9. A method according to any of the preceding claims, wherein the localisation and/or velocity information contains one or more of the group consisting of: presence of the portable device, position of the portable device, change in the position of the portable device, velocity of the portable device, and change in velocity of the portable device as a function of time.

10. A method according to claim 9, wherein the velocity vector is determined directly from a frequency Doppler shift of the service request/acquisition signal.

11. A method according to claim 9, wherein the velocity vector is determined by determining a location of the portable device at two different points in time.

12. A method according to any of the preceding claims, wherein the algorithm contains statistical dilution of precision (DOP) for the position information (PDOP) and time information (TDOP).

Fig. 1

Fig. 2

Fig. 3

Fig. 4

Europäisches
Patentamt

European
Patent Office

Office européen
des brevets

# EUROPEAN SEARCH REPORT

Application Number

EP 16 18 7540

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/234803 A1 (SMITH CLINT [US] ET AL) 11 August 2016 (2016-08-11) <br> * paragraph [0054] - paragraph [0062] * <br> * paragraph [0089] - paragraph [0098] * <br> * paragraph [0141] - paragraph [0181] * <br> ----- | 1-12 | INV. <br> G01S5/02 <br> H04W64/00 |
| X | US 2006/276201 A1 (DUPRAY DENNIS J [US]) 7 December 2006 (2006-12-07) <br> * paragraph [0153] - paragraph [0166] * <br> * paragraph [0192] - paragraph [0206] * <br> * paragraph [0215] - paragraph [0258] * <br> ----- | 1-12 | |
| X | US 8 554 246 B2 (BOYER PETE A [US] ET AL) 8 October 2013 (2013-10-08) <br> * column 3, line 15 - line 31 * <br> * column 6, line 17 - column 15, line 61 * <br> ----- | 1-12 | |

TECHNICAL FIELDS
SEARCHED (IPC)

H04W
G01S

The present search report has been drawn up for all claims

| Place of search | Date of completion of the search | Examiner |
|---|---|---|
| Berlin | 14 February 2017 | Kalabic, Faris |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 16 18 7540

This annex lists the patent family members relating to the patent documents cited in the above-mentioned European search report.
The members are as contained in the European Patent Office EDP file on
The European Patent Office is in no way liable for these particulars which are merely given for the purpose of information.

14-02-2017

| Patent document cited in search report | | | Publication date | Patent family member(s) | | | Publication date |
|---|---|---|---|---|---|---|---|
| US 2016234803 | A1 | | 11-08-2016 | AU | 2012296566 | A1 | 20-02-2014 |
| | | | | CA | 2843913 | A1 | 21-02-2013 |
| | | | | CN | 104025677 | A | 03-09-2014 |
| | | | | EP | 2745585 | A1 | 25-06-2014 |
| | | | | HK | 1200635 | A1 | 07-08-2015 |
| | | | | JP | 5856675 | B2 | 10-02-2016 |
| | | | | JP | 2014529947 | A | 13-11-2014 |
| | | | | KR | 20140093924 | A | 29-07-2014 |
| | | | | RU | 2014109421 | A | 27-09-2015 |
| | | | | US | 2013045759 | A1 | 21-02-2013 |
| | | | | US | 2014273920 | A1 | 18-09-2014 |
| | | | | US | 2015230055 | A1 | 13-08-2015 |
| | | | | US | 2015281884 | A1 | 01-10-2015 |
| | | | | US | 2015350836 | A1 | 03-12-2015 |
| | | | | US | 2015350837 | A1 | 03-12-2015 |
| | | | | US | 2015365801 | A1 | 17-12-2015 |
| | | | | US | 2015382145 | A1 | 31-12-2015 |
| | | | | US | 2016080910 | A1 | 17-03-2016 |
| | | | | US | 2016084936 | A1 | 24-03-2016 |
| | | | | US | 2016094949 | A1 | 31-03-2016 |
| | | | | US | 2016212581 | A1 | 21-07-2016 |
| | | | | US | 2016234803 | A1 | 11-08-2016 |
| | | | | WO | 2013025824 | A1 | 21-02-2013 |
| | | | | WO | 2016172077 | A1 | 27-10-2016 |
| | | | | WO | 2016200821 | A1 | 15-12-2016 |
| US 2006276201 | A1 | | 07-12-2006 | NONE | | | |
| US 8554246 | B2 | | 08-10-2013 | US | 2013130710 | A1 | 23-05-2013 |
| | | | | WO | 2013077967 | A1 | 30-05-2013 |

EPO FORM P0459

For more details about this annex : see Official Journal of the European Patent Office, No. 12/82